# FASCICULE DE BREVET EUROPEEN

(11) **EP 1 972 156 B1**
(45) Date de publication et mention de la délivrance du brevet: **20.07.2016**
(21) Numéro de dépôt: 07717912.5
(22) Date de dépôt: 12.01.2007
(51) Int. Cl.: H04N 19/52, H04N 19/196, H04N 19/463, H04N 19/517

(54) **CODAGE ET DECODAGE ADAPTATIFS**
ADAPTIVE KODIERUNG UND DEKODIERUNG
ADAPTIVE ENCODING AND DECODING

(30) Priorité: 12.01.2006 FR 0600273
(43) Date de publication de la demande: 24.09.2008
(73) Titulaire: Orange, 75015 Paris (FR)
(72) Inventeur: JUNG, Joël, F-78320 Le Mesnil Saint Denis (FR); LAROCHE, Guillaume, F-75015 Paris (FR); BAILLAVOINE, Marc, F-78530 Buc (FR)
(74) Mandataire: Cabinet Plasseraud
(86) Numéro de dépôt international: PCT/IB2007/000812
(87) Numéro de publication internationale: WO 2007/080520

(56) Documents cités:
- US-A1- 2004 264 573
- US-B1- 6 498 810
- US-B1- 6 983 018
- SUNG DEUK KIM ET AL: "An Efficient Motion Vector Coding Scheme Based on Minimum Bitrate Prediction" IEEE TRANSACTIONS ON IMAGE PROCESSING, IEEE SERVICE CENTER, PISCATAWAY, NJ, US, vol. 8, no. 8, août 1999 (1999-08), XP011026355 ISSN: 1057-7149 cité dans la demande
- WENQING JIANG ET AL: "Forward/backward adaptive context selection with applications to motion vector field encoding" IMAGE PROCESSING, 1997. PROCEEDINGS., INTERNATIONAL CONFERENCE ON SANTA BARBARA, CA, USA 26-29 OCT. 1997, LOS ALAMITOS, CA, USA,IEEE COMPUT. SOC, US, 26 octobre 1997 (1997-10-26), pages 168-171, XP010254049 ISBN: 0-8186-8183-7
- FAOUZI KOSSENTINI ET AL: "Predictive RD Optimized Motion Estimation for Very Low Bit-Rate Video Coding", IEEE JOURNAL ON SELECTED AREAS IN COMMUNICATIONS, IEEE SERVICE CENTER, PISCATAWAY, US, vol. 15, no. 9, 1 December 1997 (1997-12-01), XP011054728, ISSN: 0733-8716

## Description

La présente invention concerne les techniques de codage d'images.

Beaucoup de codeurs d'images supportent un mode de codage inter images (« inter-frame coding », ci-après codage en Inter), dans lequel le mouvement entre les images d'une séquence est estimé afin que l'image la plus récente soit codée relativement à une ou plusieurs images précédentes.

Chaque image de la séquence peut aussi être codée sans référence aux autres. C'est ce qu'on appelle le codage en Intra (« intra-frame coding »). Ce mode de codage exploite les corrélations spatiales au sein d'une image. Pour un débit de transmission donné du codeur vers le décodeur, il procure une moins bonne qualité vidéo que le codage en Inter puisqu'il ne tire pas parti des corrélations temporelles entre les images de la séquence.

Couramment, une séquence a sa première image codée en Intra puis les images suivantes codées en Inter. Des informations incluses dans le flux de sortie du codeur indiquent les images codées en Intra et en Inter et, dans ce dernier cas, la ou les image(s) de référence à employer.

Plusieurs procédés de codage existants permettent de coder une portion d'image courante par la détermination d'informations représentatives appelées descripteurs. Ces descripteurs sont par exemple des informations relatives aux pixels, telles que la luminance et la chrominance, ou encore des vecteurs de mouvements ou des informations de choix du mode de codage.

Certains de ces descripteurs, notamment les vecteurs de mouvement, sont prédictibles. Il est alors possible d'analyser les portions d'images afin d'obtenir des descripteurs prédits qui sont ensuite comparés aux descripteurs courants pour extraire un résidu représentant la différence entre descripteurs prédits et courants. Seul ce résidu doit être transmis vers un décodeur.

En effet, les procédés de décodage correspondants sont adaptés pour déterminer localement les descripteurs prédits, tels que les vecteurs de mouvement prédits, et les combiner avec le résidu reçu du codeur, pour obtenir les descripteurs courants et donc la portion d'image courante.

Ainsi, dans un tel codage, le flux entre le codeur et le décodeur contient uniquement le résidu et éventuellement, la référence des portions d'images à utiliser.

Le document Faouzi Kossentini et al, "Predictive RD Optimizated Motion Estimation for Very Low Bit-Rate Video Coding", IEEE Journal on Selected Areas in Communication, IEEE Service Center, Piscataway, US, vol. 15, no. 9, 1 décembre 1997, XP011054728, ISSN 0733-8716 divulgue des moyens de prédiction en utilisant différents types de prédicteurs pour un codage optimisé selon un critère de distortion-débit.

Cependant, dans certains cas, la fonction de prédiction utilisée n'est pas optimale. Pour pallier ce problème, il peut être fait usage de groupes de fonctions de prédiction utilisables au niveau du codeur et du décodeur. Chacune des fonctions utilisables est testée au niveau du codeur avant qu'il en soit sélectionné une, en général, celle qui permet d'obtenir un résidu minimal.

En particulier, parmi les descripteurs, les vecteurs de mouvements requièrent une bande passante importante, du fait notamment de leur précision et sont donc susceptibles d'être transmis par l'utilisation d'un résidu.

Il est alors nécessaire d'inclure dans le flux de sortie du codeur un identifiant de la fonction de prédiction utilisée pour permettre au décodeur d'appliquer la bonne fonction de prédiction.

La bande passante allouée à l'identifiant de la fonction de prédiction n'est pas négligeable et augmente avec la taille du groupe dont la fonction est issue.

Ce problème est abordé dans la publication IEEE Transactions on image processing, Vol. 8, n° 8, d'août 1999, de Sung Deuk Kim et Jong Beom Ra, qui propose un système de codage particulier pour l'identifiant de la fonction de prédiction utilisée pour les vecteurs de mouvement.

Ainsi, une augmentation de la taille du groupe de fonctions de prédiction utilisables améliore la qualité de la prédiction mais requiert l'allocation d'une bande passante plus importante pour l'identifiant.

Le but de la présente invention est de résoudre ce problème en proposant un procédé de codage et un procédé de décodage correspondant permettant une prédiction optimale en limitant la réduction de la bande passante.

L'objet de la présente invention est indiqué par les revendications ci-jointes.

Ainsi, les adaptations des groupes de fonctions de prédiction utilisables ne sont pas transmises mais sont déterminées de manière autonome au niveau du codeur et au niveau du décodeur. En conséquence, il est possible d'optimiser le groupe de fonctions de prédiction utilisables sans impact sur la bande passante.

Selon d'autres caractéristiques de l'invention la formation d'un descripteur prédit comprend l'application d'une fonction de prédiction paramétrable, l'adaptation comprend la modification d'au moins un des paramètres de la fonction de prédiction et certains des paramètres adaptés ne sont pas transmis entre le codeur et le décodeur.

Il est ainsi possible d'appliquer le principe de l'invention aux paramètres d'une fonction paramétrable pour optimiser une fonction de prédiction sans réduire la bande passante disponible pour les données.

Avantageusement, lorsque le groupe de fonctions utilisables comporte plusieurs éléments distincts, l'invention comporte, au niveau du codeur, l'expression, par rapport au groupe de fonctions utilisables aux paramètres adaptés, d'un identifiant de la fonction de prédiction sélectionnée et l'intégration, dans un flux de sortie, de cet identifiant. De manière symétrique, cet identifiant est reçu et utilisé au niveau du décodeur.

Dans ce mode de réalisation la bande passante nécessaire pour transmettre l'identifiant est réduite puisque cet identifiant est exprimé par rapport à un groupe de fonctions utilisables dont les paramètres sont adaptés au contexte.

Dans un mode de réalisation particulier, la sélection comprend le test de chacune des fonctions du groupe de fonctions utilisables et la sélection d'une fonction particulière par rapport à ces tests de sorte que les fonctions de prédiction sont mises en compétition entre elles.

Par ailleurs, la présente invention a également pour objet des programmes mettant en oeuvre les procédés tels que décrits précédemment ainsi que des codeurs et décodeurs correspondants.

D'autres particularités et avantages de la présente invention apparaîtront dans la description faite ci-après à titre non limitatif et en référence aux dessins annexés dans lesquels :
- la figure 1 est un schéma montrant deux stations en communication pourvues de codeurs-décodeurs vidéo ;
- la figure 2 est un schéma synoptique d'une partie d'un codeur vidéo selon l'invention ; et
- la figure 3 est un schéma synoptique d'une partie d'un décodeur vidéo selon l'invention, apte à restituer des images codées par le codeur de la figure 2.

L'invention est applicable à tout type de codage d'images tel que, par exemple, le codage d'une séquence vidéo d'un flux de télévision numérique entre un émetteur 2 contenant un codeur vidéo 4 et une station de réception 6 contenant un décodeur 8. Par exemple, l'émetteur 2 comporte une antenne émettant sur un canal hertzien de télévision numérique selon un format tel que le format dit DVB et la station 6 est un ordinateur personnel.

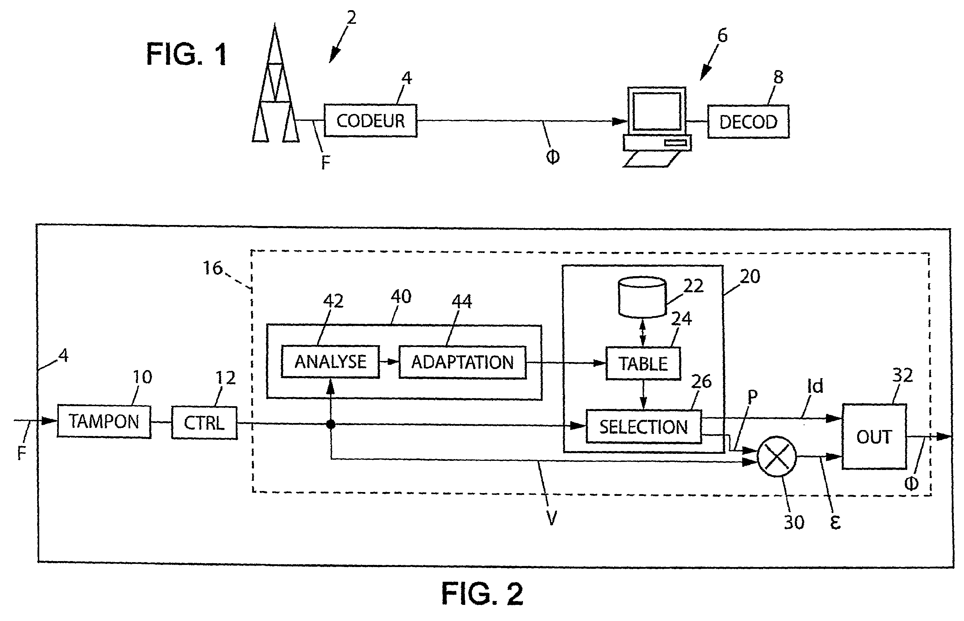

En référence à la figure 2, on va maintenant décrire en détail une partie du codeur 4 qui reçoit en entrée un flux F d'images d'une séquence vidéo à transmettre. Le terme image désigne généralement un élément de la séquence vidéo. En fonction du standard utilisé, il peut indifféremment être remplacé par le terme trame.

Dans le codeur 4, le flux F est tout d'abord mémorisé dans une mémoire tampon 10 et une unité de contrôle 12 détermine, pour chaque portion d'image courante de la mémoire tampon, des descripteurs parmi lesquels, des informations de pixel, c'est-à-dire de luminance et de chrominance, un vecteur de mouvement et un mode de codage tel que inter ou intra.

Dans la suite, on décrit uniquement le traitement d'un vecteur de mouvement noté V, codé en inter, c'est-à-dire par rapport à des portions des images précédant l'image courante dans la séquence vidéo. L'invention peut cependant être appliquée à d'autres types de descripteurs et notamment au descripteur du mode de codage.

L'unité de contrôle 12 est reliée à une chaîne de codage 16 qui comprend des moyens 20 de prédiction d'un vecteur de mouvement prédit pour la portion d'image courante à partir d'une ou plusieurs portions d'images précédentes et de paramètres de prédiction pour le codage. Plus précisément, le vecteur de mouvement prédit pour la portion d'image courante est obtenu par l'application d'une fonction de prédiction à un ou plusieurs vecteurs de mouvement d'autres portions d'images. Ces vecteurs de mouvement résultent de l'analyse de ces autres portions d'images.

Les moyens 20 comportent une base de données 22 comprenant une pluralité de fonctions de prédiction de vecteurs de mouvement. Certaines de ces fonctions sont extraites de la base 22 afin de former une table 24 de fonctions de prédiction utilisables.

Par exemple, cette table 24 se présente sous la forme du tableau suivant :

| TYPE | REFERENCE | DETAILS |
|---|---|---|
| Fonctions Spatiales | 0 | Codage par rapport à la valeur fixe 0 |
| | GMs | Codage par rapport au mouvement global évalué spatialement sur les images déjà codées |
| | Valeur | Codage par rapport à la valeur sur ce fragment |
| | Médian | Codage par rapport au médian |
| | Moyenne | Codage par rapport à la moyenne |
| Fonctions Temporelles | Médian | Codage par rapport au médian temporel |
| | Collocated | Codage par rapport au vecteur collocated |
| | Moyenne | Codage par rapport à la moyenne temporelle |
| | GMt | Codage par rapport au mouvement global évalué temporellement |
| Fonctions Spatio-temporelles | Médian | Codage par rapport à un médian spatio-temporel |
| Autres | Inter composante | Prédiction entre les 2 composantes x et y |

Dans le mode de réalisation décrit, cette table 24 est paramétrable et peut varier notamment en taille et en contenu comme cela sera décrit plus loin, de sorte que les paramètres de prédiction pour le codage comprennent les paramètres de la table 24.

La table 24 est reliée à une unité 26 de sélection qui est adaptée pour tester chacune des fonctions de prédiction utilisables de la table 24 pour le codage du vecteur de mouvement de la portion d'image courante. Plus précisément, l'unité 26 applique tour à tour chacune des fonctions de prédiction à une ou plusieurs portions d'images précédant la portion courante dans la séquence vidéo, c'est-à-dire à un ou plusieurs vecteurs de mouvement résultants de l'analyse de ces portions d'images précédentes.

En fonction de ces tests, une fonction de prédiction particulière est retenue de manière à former un descripteur prédit, c'est-à-dire un vecteur de mouvement prédit noté P. Cette sélection constitue une mise en compétition des fonctions de prédiction de manière à sélectionner, par exemple, la fonction permettant d'obtenir le résidu le plus petit possible. La fonction de prédiction sélectionnée est identifiée par un identifiant noté Id exprimé par rapport à la table et correspondant, dans l'exemple décrit, au numéro de la fonction dans la table 24.

Le vecteur de mouvement prédit P est transmis à une unité 30 de combinaison qui reçoit également le vecteur courant V, de manière à déterminer un résidu noté ε, représentant une différence entre le descripteur prédit P et le descripteur courant V.

Le codeur 4 comporte également une unité 32 de génération d'un flux de données de sortie Φ, recevant en entrée le résidu ε ainsi que d'autres éléments d'information classiques tels que, par exemple, les identifiants des portions d'images sur lesquelles doit être appliquée la fonction de prédiction.

Dans l'exemple décrit, l'unité de sélection 26 transmet également à l'unité 32 l'identifiant Id de la fonction de prédiction utilisée. La taille de cet identifiant dépend directement de la taille de la table 24, de sorte que la bande passante réservée à cet identifiant Id dans le flux de sortie Φ varie en fonction de la taille de la table 24.

Par ailleurs, la chaîne de codage 16 comprend également des moyens 40 de modification de paramètres de prédiction en fonction du contexte de codage et qui comportent à cet effet une unité 42 d'analyse du contexte de codage.

Par analyse du contexte de codage, on entend analyse de différents indicateurs définissant le cadre général dans lequel le codage est réalisé. Ces indicateurs sont notamment :
- des indicateurs statistiques liés à l'étape de prédiction, tels que des pourcentages d'utilisation des fonctions de prédiction ou des écarts constatés entre des fonctions de prédiction ;
- des indicateurs décrivant les variations des images, tels que des gradients directionnels entre les images, le mouvement global d'une zone, l'activité, la quantité d'images ou de fragments d'images codés en intra, en inter ou encore qui sont inchangés; et
- des indicateurs décrivant les conditions de transmission, tels que des allocations de bande passante en fonction des conditions de transmission ou de choix de résolution d'image.

En fonction de cette analyse du contexte de codage, une unité 44 adapte certains des paramètres de prédiction. Plus particulièrement, cette unité 44 modifie les paramètres de la table 24 de fonctions de prédiction utilisables en enlevant ou en rajoutant des fonctions de cette table 24.

Dans l'exemple décrit, des règles prédéterminées régissent l'adaptation de la table 24. Des exemples de telles règles sont exposés ci-après.

Selon une première règle, dans une situation où les caractéristiques locales de l'image indiquent que le mouvement global est régulier sur la zone à coder et que la zone à coder contient de fortes discontinuités, les fonctions de prédiction de type temporel sont privilégiées. Le mouvement global est calculé en étudiant les valeurs des vecteurs de mouvement sélectionnés précédemment pour le codage d'images ou de portions d'images. Les discontinuités sont calculées en sommant les valeurs absolues après un filtrage de type détection de contours. On privilégie les fonctions de type temporel soit en rajoutant, dans la table 24 de fonctions de prédiction utilisables, des fonctions de type temporel, soit en supprimant des fonctions de type spatial ou autre.

Dans une autre situation, si la séquence d'images est déterminée comme étant statique, c'est-à-dire que le nombre de vecteurs de mouvements égaux à 0 est supérieur à un seuil déterminé et que le nombre d'images ou de portions d'image inchangées est élevé, ou encore si les statistiques d'utilisation des fonctions de prédiction temporelle sont faibles, les adaptations favorisent les fonctions de prédiction de type spatial dans la table 24 au dépend des fonctions de type temporel.

Par ailleurs, si deux fonctions de prédiction de la table 24 de fonctions utilisables sont proches en terme de distance, c'est-à-dire que la somme des différences entre les prédictions obtenues par chacune de ces fonctions est faible, leur présence commune n'est plus nécessaire et l'une de ces fonctions de prédiction est supprimée.

S'il est constaté qu'une fonction de prédiction est très rarement choisie, elle peut également être supprimée.

Selon encore une autre règle, lorsqu'un changement de plan est détecté entre des images successives, la table 24 de fonctions de prédiction utilisables est réinitialisée.

Enfin, selon encore une autre règle, la taille de la table est déterminée en partie en fonction de la bande passante disponible pour la transmission, une taille plus importante étant autorisée lorsqu'une fraction importante de la bande passante est disponible. De manière similaire, des limites supérieures ou inférieures de la taille de table peuvent être établies en fonction de la qualité d'image requise et/ou de la bande passante disponible.

Ainsi, les paramètres de taille et de contenu de la table 24 sont adaptés au contexte de codage de manière à ne retenir que les fonctions de prédiction les plus pertinentes tout en conservant à la table 24, et donc à l'identifiant Id, une taille aussi réduite que possible.

Certains des paramètres de prédiction adaptés ne sont pas intégrés dans le flux de sortie Φ. Plus précisément, dans l'exemple décrit, aucune des adaptations apportées à la table 24 n'est décrite ou référencée dans le flux de sortie.

En effet, ces adaptations résultent de l'analyse du contexte de codage, de sorte qu'elles peuvent être reproduites de manière autonome au niveau du codeur et du décodeur, c'est-à-dire sans qu'il soit nécessaire de les transmettre.

Il est ainsi possible d'obtenir un codage amélioré des descripteurs de la portion d'image courante et notamment des vecteurs de mouvement, à l'aide d'une fonction de prédiction adaptée et sans impact sur la bande passante allouée à la transmission de l'identifiant Id de la fonction de prédiction utilisée. Ceci résulte de la limitation de la taille de cette identifiant par le contrôle des paramètres de la table 24.

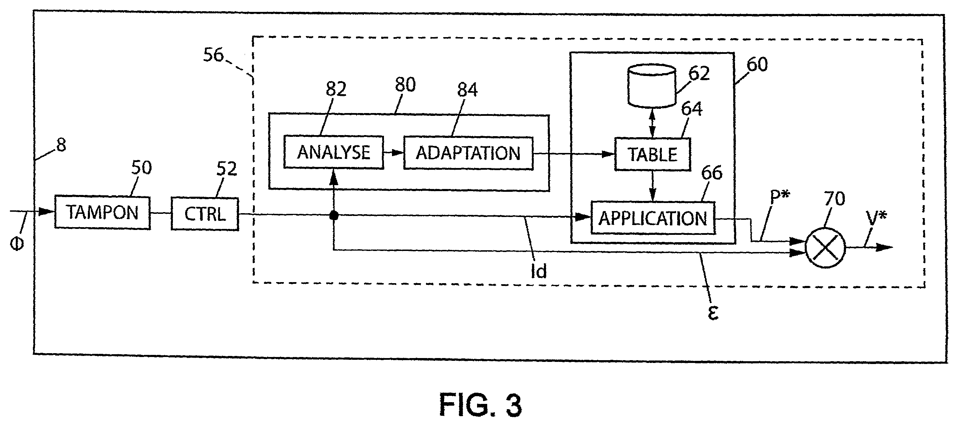

En référence à la figure 3, on va maintenant décrire en détails une partie du décodeur 8 qui reçoit le flux Φ émis par le codeur 4.

Ce décodeur 8 comporte une mémoire tampon 50 qui reçoit le flux Φ et une unité de contrôle 52 qui analyse les données du flux et notamment les informations de type de codage.

La sortie de l'unité de contrôle 52 est transmise à une chaîne de décodage 56. Comme dans le cas du codeur, la chaîne de décodage 56 va être décrite uniquement par rapport à un descripteur particulier qui est un vecteur de mouvement codé en inter.

La chaîne de décodage 56 comporte des moyens 60 de prédiction de descripteurs de la portion d'image courante, adaptés pour délivrer un vecteur de mouvement prédit P* à partir d'autres portions d'images et de paramètres de prédiction pour le décodage. Comme pour le codeur, ces moyens 60 sont aptes à appliquer une fonction de prédiction à un ou plusieurs vecteurs de mouvement résultants de l'analyse d'autres portions d'images.

Les moyens 60 comprennent une base de données 62 de fonctions de prédiction qui contient les mêmes fonctions de prédiction que la base de données 22 du codeur 4. Les moyens 60 comportent également une table 64 de fonctions de prédiction utilisables et une unité 66 d'application d'une fonction. Cette unité 66 extrait de la table 64 une fonction particulière à utiliser et de la mémoire tampon 50, là où les portions images sur lesquelles la fonction de prédiction doit être appliquée pour délivrer le vecteur de mouvement prédit P*.

Dans le mode de réalisation décrit, la table 64 est paramétrable notamment quant à sa taille et à son contenu, de sorte que les paramètres de prédiction comprennent les paramètres de la table 64.

La chaîne de décodage 56 comporte également une unité 70 de combinaison recevant en entrée le vecteur de mouvement prédit P* et le résidu ε reçu dans le flux Φ, et délivrant en sortie un vecteur de mouvement courant V* correspondant au vecteur V dans sa version décodée. Ce vecteur V* doit être appliqué pour obtenir la portion d'image courante dans sa version décodée.

Par ailleurs, la chaîne de décodage 56 comporte des moyens 80 de modification de paramètres de prédiction, en fonction du contexte de décodage, aptes à fonctionner de manière autonome, c'est-à-dire sans instructions provenant du codeur.

Plus précisément, les moyens 80 comportent une unité 82 d'analyse du contexte de décodage, similaire à l'unité 42 décrite précédemment, et une unité 84 d'adaptation de certains paramètres de prédiction pour le décodage, similaire à l'unité 44.

L'unité 82 d'adaptation est apte à modifier de manière autonome la table 64 de fonctions de prédiction utilisables. Ces adaptations sont réalisées selon les mêmes règles et les mêmes critères que les adaptations mises en oeuvre par l'unité 42 au niveau du codeur 4. En conséquence, ces adaptations sont identiques, de sorte que les tables 64 et 24 de fonctions de prédiction utilisables sont modifiées de la même manière respectivement au niveau du codeur et au niveau du décodeur, sans qu'il soit nécessaire de transmettre d'informations descriptives de ces adaptations.

L'identifiant Id de la fonction de prédiction, correspondant au numéro de la fonction utilisée dans la table 24 ou 64, suffit au décodeur pour sélectionner et appliquer la même fonction de prédiction que celle utilisée au niveau du codeur. Cette fonction est la fonction de prédiction optimale par rapport à toutes les fonctions de prédiction utilisables du fait des adaptations apportée aux tables 24 et 64.

Ces codeurs et décodeurs permettent ainsi de mettre en ouvre respectivement des procédés de codage et de décodage spécifiques.

Ainsi, pour le codage d'une portion d'image courante, le codage comprend d'abord la détermination du vecteur de mouvement courant V ainsi .. que l'analyse du contexte de codage qui conduit à une adaptation de paramètres de la table 24. Dans l'exemple, cette optimisation comprend la modification des fonctions présentes dans la table 24 pour ne retenir que les fonctions les plus pertinentes en fonction du contexte de codage.

L'unité de sélection 26 teste ensuite chacune des fonctions utilisables pour aboutir à l'application d'une fonction de prédiction particulière délivrant le vecteur de mouvement prédit P. Cette fonction est référencée par son numéro dans la table 24, notée Id.

Le vecteur prédit P et le vecteur courant V sont combinés par l'unité 30 pour obtenir le résidu ε qui est intégré dans le flux de sortie Φ avec l'identifiant Id. Aucune information descriptive des adaptations apportées à la table 24 n'est intégrée dans le flux de sortie.

Le décodage de cette portion d'image courante comprend, de manière correspondante, la réception du flux Φ, puis l'analyse du contexte de décodage et l'adaptation de paramètres de la table 64. Comme au niveau du codage, cette adaptation comprend la modification des fonctions présentes dans la table 64. Une fois que cette table est adaptée, l'identifiant Id est utilisé pour sélectionner une fonction de prédiction particulière dans la table 64 et l'appliquer afin d'obtenir le vecteur de mouvement prédit P*.

Ce vecteur P* est ensuite combiné par l'unité 70 avec le résidu ε reçu pour obtenir le vecteur de mouvement courant V* qui permettra d'aboutir à la portion d'image courante dans sa version décodée.

L'ensemble des procédés de codage et de décodage forme un procédé de transmission d'images comprenant, au niveau du codeur et du décodeur, des étapes autonomes d'analyse du contexte respectivement de codage et de décodage et d'adaptation des paramètres de prédiction.

Bien entendu, d'autres modes de réalisation de l'invention peuvent également être envisagés.

Dans une variante, les moyens de prédiction utilisés dans la chaîne de codage et dans la chaîne de décodage comportent une ou plusieurs fonctions de prédiction paramétrables. Par exemple, une fonction de prédiction de type temporel, telle qu'une fonction de médian, peut être appliquée sur des surfaces de référence plus ou moins grandes, la taille de la surface formant un paramètre de prédiction. De la même manière, une fonction de prédiction temporelle peut utiliser un paramètre de multiplication déterminé en fonction du mouvement constaté sur les images. Les paramètres de cette ou ces fonctions forment alors des paramètres de prédiction.

L'utilisation et l'adaptation de tels paramètres permettent d'optimiser la fonction de prédiction et notamment de réduire le résidu ε à transmettre.

Comme précédemment, ces paramètres sont modifiés de manière autonome au niveau du codeur et du décodeur de sorte qu'il n'est pas nécessaire de transmettre d'information descriptive de certaines adaptations des paramètres des fonctions de prédiction entre le codeur et le décodeur.

Bien entendu, dans le cas où une seule fonction de prédiction est utilisable, comme par exemple dans le cas où il n'est pas prévu de compétition entre des fonctions de prédiction mais l'utilisation d'une unique fonction paramétrable, il n'est pas nécessaire de transmettre un identifiant de la fonction entre le codeur et le décodeur. Le flux de données comprend alors uniquement le résidu et la référence de la ou des images précédentes à utiliser.

Dans encore une autre variante, les portions d'images sont codées en intra, c'est-à-dire qu'elles sont codées les unes par rapport aux autres au sein d'une même image. Dans ce cas, il est également possible d'utiliser des descripteurs prédictibles, comme par exemple un vecteur de mouvement appliqué à une portion déjà décodée de l'image pour obtenir la portion d'image courante.

Tant au niveau du codeur que du décodeur, l'implémentation de l'invention peut reposer sur des programmes adaptés pour inclure les particularités décrites précédemment. Bien entendu, il est également possible d'utiliser des processeurs spécialisés ou des circuits spécifiques.

## Revendications

1. Procédé de codage d'images, le codage d'au moins une portion d'image courante comprenant les étapes suivantes :
- la détermination d'un descripteur courant (V) de la portion d'image courante ;
- la sélection d'une fonction de prédiction dans un groupe (24) paramétrable de fonctions utilisables ;
- la formation d'un descripteur prédit (P) de la portion d'image courante à partir d'au moins une autre portion d'image et de la fonction de prédiction sélectionnée ;
- la détermination d'un résidu (ε) représentant une différence entre le descripteur prédit et le descripteur courant ; et
- l'intégration du résidu dans un flux de sortie (Φ) destiné à un décodeur (8) ;
**caractérisé en ce que** le procédé comprend en outre :
- l'analyse d'un contexte de codage ; et
- l'adaptation par l'ajout ou la suppression de fonctions de prédiction dudit groupe (24) de fonctions utilisables, en fonction de l'analyse du contexte de codage.

2. Procédé selon la revendication 1, **caractérisé en ce que** la formation d'un descripteur prédit comprend l'application d'une fonction de prédiction paramétrable, **en ce que** l'adaptation comprend la modification d'au moins un des paramètres de la fonction de prédiction et **en ce que** certains des paramètres adaptés ne sont pas intégrés dans un flux de sortie destiné au décodeur.

3. Procédé selon l'une quelconque des revendications 1 et 2, **caractérisé en ce que**, lorsque le groupe de fonctions utilisables comporte plusieurs éléments distincts, le procédé comporte en outre l'expression, par rapport au groupe de fonctions utilisables aux paramètres adaptés, d'un identifiant (Id) de la fonction de prédiction sélectionnée et l'intégration, dans un flux de sortie (Φ), de cet identifiant (Id).

4. Procédé selon l'une quelconque des revendications 1 à 3, **caractérisé en ce que** ladite sélection comprend le test de chacune des fonctions du groupe (24) de fonctions utilisables et la sélection d'une fonction particulière par rapport à ces tests.

5. Programme d'ordinateur à installer dans un appareil de traitement vidéo (4) comprenant des instructions pour mettre en oeuvre les étapes d'un procédé de codage vidéo selon l'une quelconque des revendications 1 à 4 lors d'une exécution du programme par une unité de calcul dudit appareil.

6. Codeur d'images comprenant :
- des moyens (12) de détermination d'un descripteur courant (V) pour une portion d'image courante ;
- des moyens (26) de sélection d'une fonction de prédiction dans un groupe paramétrable de fonctions utilisables (24) ;
- des moyens (20) de prédiction aptes à former un descripteur prédit (P) de la portion d'image courante à partir d'au moins une autre portion d'image et de la fonction de prédiction sélectionnée ;
- des moyens (30) de détermination d'un résidu (ε) représentant une différence entre le descripteur prédit et le descripteur courant ; et
- des moyens (32) d'intégration de ce résidu dans un flux de sortie (Φ) destiné à un décodeur (8),
**caractérisé en ce que** le codeur comprend en outre :
- des moyens (42) d'analyse du contexte de codage ;
- des moyens (44) d'adaptation par l'ajout ou la suppression de fonctions de prédiction dudit groupe (24) de fonctions utilisables, en fonction de l'analyse du contexte de codage.

7. Codeur selon la revendication 6, **caractérisé en ce que** lesdits moyens (20) de prédiction comprennent une unité d'application d'une fonction de prédiction paramétrable et **en ce que** les moyens d'adaptation sont aptes à modifier au moins un des paramètres de la fonction de prédiction, certains des paramètres adaptés n'étant pas intégrés dans un flux de sortie destiné au décodeur.

8. Codeur selon l'une quelconque des revendications 6 et 7, **caractérisé en ce qu'**il comporte en outre des moyens d'expression, par rapport au groupe de fonctions utilisables aux paramètres adaptés, d'un identifiant (Id) de la fonction de prédiction sélectionnée et des moyens d'intégration de cet identifiant dans un flux de sortie destiné au décodeur.

9. Procédé de décodage d'images, le décodage d'au moins une portion d'image courante comprenant les étapes suivantes :
- la réception d'un flux de données (Φ) comprenant un résidu (ε) ;
- la sélection d'une fonction de prédiction dans un groupe paramétrable (64) de fonctions de prédiction utilisables ;
- la formation d'un descripteur prédit (P*) de la portion d'image courante à partir d'au moins une autre portion d'image et de la fonction de prédiction sélectionnée ; et
- la combinaison du descripteur prédit et du résidu pour délivrer un descripteur courant (V*) de la portion d'image courante,
**caractérisé en ce que** le procédé comprend en outre :
- l'analyse du contexte de décodage ; et
- l'adaptation par l'ajout ou la suppression de fonctions de prédiction dudit groupe (24) de fonctions utilisables, en fonction de l'analyse du contexte de décodage.

10. Procédé selon la revendication 9, **caractérisé en ce que** la formation du descripteur prédit comprend l'application d'une fonction de prédiction paramétrable et **en ce que** l'adaptation comprend la modification d'au moins un des paramètres de la fonction de prédiction.

11. Procédé selon l'une quelconque des revendications 9 et 10, **caractérisé en ce qu'**il comprend la réception d'un identifiant (Id), par rapport au groupe de fonctions utilisables aux paramètres adaptés, de la fonction de prédiction à utiliser.

12. Programme d'ordinateur à installer dans un appareil de traitement vidéo, comprenant des instructions pour mettre en oeuvre les étapes d'un procédé de décodage selon l'une quelconque des revendications 9 à 11, lors d'une exécution du programme par une unité de calcul dudit appareil.

13. Décodeur d'images (8) comprenant :
- des moyens (50) de réception d'un flux de données (Φ) contenant un résidu (ε) ;
- des moyens (64) de sélection d'une fonction de prédiction dans un groupe paramétrable (64) de fonctions de prédiction utilisables ;
- des moyens (60) de prédiction aptes à former un descripteur prédit (P*) d'une portion d'image courante à partir d'au moins une autre portion d'image et de la fonction de prédiction sélectionnée ; et
- des moyens (70) de combinaison du descripteur prédit et du résidu pour délivrer un descripteur courant (V*) de la portion d'image courante,
**caractérisé en ce que** le décodeur comprend en outre :
- des moyens (82) d'analyse du contexte de décodage ; et
- des moyens (84) d'adaptation par l'ajout ou la suppression de fonctions de prédiction dudit groupe (24) de fonctions utilisables, en fonction de l'analyse du contexte de décodage.

14. Décodeur selon la revendication 13, **caractérisé en ce que** les moyens de prédiction comprennent une unité d'application d'au moins une fonction de prédiction paramétrable et **en ce que** lesdits moyens d'adaptation sont aptes à modifier au moins un des paramètres de la fonction de prédiction.

15. Procédé de transmission d'images, **caractérisé en ce que**, pour au moins une portion d'image courante, il comprend une phase de codage comprenant les étapes suivantes :
- la détermination d'au moins un descripteur courant (V) de la portion d'image courante ;
- l'analyse d'un contexte de codage ;
- l'adaptation par l'ajout ou la suppression de fonctions de prédiction d'un groupe paramétrable (24) de fonctions de prédiction utilisables pour le codage, en fonction de l'analyse du contexte de codage ;
- la sélection d'une fonction de prédiction dans le groupe (24) de fonctions de prédiction utilisables pour le codage ;
- la formation d'un premier descripteur prédit (P) de la portion d'image courante à partir d'au moins une autre portion d'image et de la fonction de prédiction sélectionnée pour le codage;
- la détermination d'un résidu (ε) représentant la différence entre le premier descripteur prédit et le descripteur courant ; et
- l'intégration du résidu dans un flux de données (Φ),
le procédé comporte en outre une phase de décodage comprenant, pour ladite portion d'image courante, les étapes suivantes :
- la réception du flux (Φ) de données contenant le résidu (ε) ;
- l'analyse d'un contexte de décodage ;
- l'adaptation par l'ajout ou la suppression de fonctions de prédiction d'un groupe paramétrable (24) de fonctions de prédiction utilisables pour le décodage, en fonction de l'analyse du contexte de décodage;
- la sélection d'une fonction de prédiction dans le groupe de fonctions de prédiction utilisables pour le décodage :
- la formation d'un second descripteur prédit (P*) de la portion d'image courante à partir d'au moins une autre portion d'image et de la fonction de prédiction sélectionnée pour le décodage ; et
- la combinaison du second descripteur prédit et du résidu reçu pour délivrer une version décodée du descripteur courant (V*)

## Patentansprüche

1. Bildcodierungsverfahren, wobei die Codierung wenigstens eines aktuellen Bildabschnitts die folgenden Schritte umfasst:
- Bestimmen eines aktuellen Deskriptors (V) des aktuellen Bildabschnitts;
- Auswählen einer Vorhersagefunktion einer parametrisierbaren Gruppe (24) verwendbarer Funktionen;
- Bilden eines vorhergesagten Deskriptors (P) des aktuellen Bildabschnitts anhand wenigstens eines anderen Bildabschnitts und der ausgewählten Vorhersagefunktion;
- Bestimmen eines Rests (ε), der eine Differenz zwischen dem vorhergesagten Deskriptor und dem aktuellen Deskriptor repräsentiert; und
- Integrieren des Rests in einen Ausgangsstrom (Φ), der für einen Decodierer (8) bestimmt ist;
**dadurch gekennzeichnet, dass** das Verfahren außerdem Folgendes umfasst:
- Analysieren eines Codierungskontexts; und
- Anpassen durch Hinzufügen oder Weglassen von Vorhersagefunktionen der Gruppe (24) verwendbarer Funktionen als Funktion der Analyse des Codierungskontexts.

2. Verfahren nach Anspruch 1, **dadurch gekennzeichnet, dass** die Bildung eines vorhergesagten Deskriptors das Anwenden einer parametrisierbaren Vorhersagefunktion umfasst und dass das Anpassen das Modifizieren wenigstens eines der Parameter der Vorhersagefunktion umfasst und dass bestimmte angepasste Parameter nicht in einen Ausgangsstrom, der für den Decodierer bestimmt ist, integriert werden.

3. Verfahren nach einem der Ansprüche 1 und 2, **dadurch gekennzeichnet, dass** das Verfahren dann, wenn die Gruppe verwendbarer Funktionen mehrere verschiedene Elemente enthält, außerdem den Ausdruck in Bezug auf die Gruppe verwendbarer Funktionen mit den angepassten Parametern einer Kennung (Id) der ausgewählten Vorhersagefunktion und das Integrieren in einen Ausgangsstrom (Φ) dieser Kennung (Id) umfasst.

4. Verfahren nach einem der Ansprüche 1 bis 3, **dadurch gekennzeichnet, dass** das Auswählen das Prüfen jeder der Funktionen der Gruppe (24) verwendbarer Funktionen und das Auswählen einer besonderen Funktion in Bezug auf diese Prüfungen umfasst.

5. Computerprogramm, das in einem Videoverarbeitungsgerät (4) zu installieren ist und Befehle enthält, um die Schritte eines Videocodierungsverfahrens nach einem der Ansprüche 1 bis 4 auszuführen, wenn das Programm von einer Recheneinheit des Geräts ausgeführt wird.

6. Bildcodierer, der Folgendes umfasst:
- Mittel (12) zum Bestimmen eines aktuellen Deskriptors (V) für einen aktuellen Bildabschnitt;
- Mittel (26) zum Auswählen einer Vorhersagefunktion aus einer parametrisierbaren Gruppe verwendbarer Funktionen (24);
- Vorhersagemittel (20), die einen vorhergesagten Deskriptor (P) des aktuellen Bildabschnitts anhand wenigstens eines anderen Bildabschnitts und der ausgewählten Vorhersagefunktion bilden können;
- Mittel (30) zum Bestimmen eines Rests (ε), der eine Differenz zwischen dem vorhergesagten Deskriptor und dem aktuellen Deskriptor repräsentiert; und
- Mittel (32) zum Integrieren dieses Rests in einen Ausgangsstrom (Φ), der für einen decodierer (8) bestimmt ist,
**dadurch gekennzeichnet, dass** der Codierer außerdem Folgendes umfasst:
- Mittel (42) zum Analysieren des Codierungskontexts;
- Mittel (44) zum Anpassen durch Hinzufügen oder Weglassen von Vorhersagefunktionen der Gruppe (24) verwendbarer Funktionen als Funktion der Analyse des Codierungskontexts.

7. Codierer nach Anspruch 6, **dadurch gekennzeichnet, dass** die Vorhersagemittel (20) eine Einheit zum Anwenden einer parametrisierbaren Vorhersagefunktion umfassen und dass die Anpassungsmittel dafür ausgelegt sind, wenigstens einen der Parameter der Vorhersagefunktion zu modifizieren, wobei bestimmte der angepassten Parameter nicht in einen für den Decodierer bestimmten Ausgangsstrom integriert werden.

8. Codierer nach einem der Ansprüche 6 und 7, **dadurch gekennzeichnet, dass** er außerdem Mittel, um in Bezug auf die Gruppe verwendbarer Funktionen mit angepassten Parametern eine Kennung (Id) der ausgewählten Vorhersagefunktion anzugeben, und Mittel zum Integrieren dieser Kennung in einen für den Decodierer bestimmten Ausgangsstrom umfasst.

9. Bilddecodierungsverfahren, wobei das Decodieren wenigstens eines aktuellen Bildabschnitts die folgenden Schritte umfasst:
- Empfangen eines Datenstroms (Φ), der einen Rest (ε) enthält;
- Auswählen einer Vorhersagefunktion in einer parametrisierbaren Gruppe (64) verwendbarer Vorhersagefunktionen;
- Bilden eines vorhergesagten Deskriptors (P*) des aktuellen Bildabschnitts anhand wenigstens eines anderen Bildabschnitts und der ausgewählten Vorhersagefunktion; und
- Kombinieren des vorhergesagten Deskriptors und des Rests, um einen aktuellen Deskriptor (V*) des aktuellen Bildabschnitts zu liefern,
**dadurch gekennzeichnet, dass** das Verfahren außerdem Folgendes umfasst:
- Analysieren des Decodierungskontexts; und
- Anpassen durch Hinzufügen oder Weglassen von Vorhersagefunktionen der Gruppe (24) verwendbarer Funktionen als Funktion der Analyse des Decodierungskontexts.

10. Verfahren nach Anspruch 9, **dadurch gekennzeichnet, dass** das Bilden des vorhergesagten Deskriptors das Anwenden einer parametrisierbaren Vorhersagefunktion umfasst und dass das Anpassen das Modifizieren wenigstens eines der Parameter der Vorhersagefunktion umfasst.

11. Verfahren nach einem der Ansprüche 9 und 10, **dadurch gekennzeichnet, dass** es das Empfangen einer Kennung (Id) in Bezug auf die Gruppe verwendbarer Funktionen mit angepassten Parametern der zu verwendenden Vorhersagefunktion umfasst.

12. Computerprogramm, das in einem Videoverarbeitungsgerät zu installieren ist und Befehle enthält, um die Schritte eines Decodierungsverfahrens nach einem der Ansprüche 9 bis 11 auszuführen, wenn das Programm von einer Recheneinheit des Geräts ausgeführt wird.

13. Bilddecodierer (8), der Folgendes umfasst:
- Mittel (50) zum Empfangen eines Datenstroms (Φ), der einen Rest (ε) enthält;
- Mittel (64) zum Auswählen einer Vorhersagefunktion aus einer parametrisierbaren Gruppe (64) verwendbarer Vorhersagefunktionen;
- Vorhersagemittel (60), die einen vorhergesagten Deskriptor (P*) eines aktuellen Bildabschnitts anhand wenigstens eines anderen Bildabschnitts und der ausgewählten Vorhersagefunktion bilden können; und
- Mittel (70) zum Kombinieren des vorhergesagten Deskriptors und des Rests, um einen aktuellen Deskriptor (V*) des aktuellen Bildabschnitts zu liefern,
**dadurch gekennzeichnet, dass** der Decodierer außerdem Folgendes umfasst:
- Mittel (82) zum Analysieren des Decodierungskontexts; und
- Mittel (84) zum Anpassen durch Hinzufügen oder Weglassen von Vorhersagefunktionen der Gruppe (24) verwendbarer Funktionen als Funktion der Analyse des Decodierungskontexts.

14. Decodierer nach Anspruch 13, **dadurch gekennzeichnet, dass** die Vorhersagemittel eine Einheit zum Anwenden wenigstens einer parametrisierbaren Vorhersagefunktion umfassen und dass die Anpassungsmittel dafür ausgelegt sind, wenigstens einen der Parameter der Vorhersagefunktion zu modifizieren.

15. Bildübertragungsverfahren, **dadurch gekennzeichnet, dass** es für wenigstens einen aktuellen Bildabschnitt eine Codierungsphase umfasst, die die folgenden Schritte umfasst:
- Bestimmen wenigstens eines aktuellen Deskriptors (V) des aktuellen Bildabschnitts;
- Analysieren eines Codierungskontexts;
- Anpassen durch Hinzufügen oder Weglassen von Vorhersagefunktionen einer parametrisierbaren Gruppe (24) verwendbarer Vorhersagefunktionen durch Codieren als Funktion der Analyse des Codierungskontexts;
- Auswählen einer Vorhersagefunktion aus der Gruppe (24) für die Codierung verwendbarer Vorhersagefunktionen;
- Bilden eines ersten vorhergesagten Deskriptors (P) des aktuellen Bildabschnitts anhand wenigstens eines anderen Bildabschnitts und der für die Codierung ausgewählten Vorhersagefunktion;
- Bestimmen eines Rests (ε), der die Differenz zwischen dem ersten vorhergesagten Deskriptor und dem aktuellen Deskriptor repräsentiert; und
- Integrieren des Rests in einen Datenstrom (Φ), wobei das Verfahren außerdem eine Decodierungsphase umfasst, die für den aktuellen Bildabschnitt die folgenden Schritte umfasst:
- Empfangen des Datenstroms (Φ), der den Rest (ε) enthält;
- Analysieren des Decodierungskontexts;
- Anpassen durch Hinzufügen oder Weglassen von Vorhersagefunktionen einer parametrisierbaren Gruppe (24) für die Decodierung verwendbarer Vorhersagefunktionen als Funktion der Analyse des Decodierungskontexts;
- Auswählen einer Vorhersagefunktion aus der Gruppe für die Decodierung verwendbarer Vorhersagefunktionen;
- Bilden eines zweiten vorhergesagten Deskriptors (P*) des aktuellen Bildabschnitts anhand wenigstens eines anderen Bildabschnitts und der für die Decodierung ausgewählten Vorhersagefunktion; und
- Kombinieren des zweiten vorhergesagten Deskriptors und des empfangenen Rests, um eine decodierte Version des aktuellen Deskriptors (V*) zu liefern.

## Claims

1. Method of coding images, the coding of at least one current image portion comprising the following steps:
- the determination of a current descriptor (V) of the current image portion;
- the selection of a prediction function from a parametrizable group (24) of usable functions;
- the formation of a predicted descriptor (P) of the current image portion on the basis of at least one other image portion and of the selected prediction function;
- the determination of a residual (ε) representing a difference between the predicted descriptor and the current descriptor; and
- the integration of the residual into an output stream (Φ) intended for a decoder (8);
**characterized in that** the method furthermore comprises:
- the analysis of a coding context; and
- the adaptation by the addition or deletion of prediction functions of said group (24) of usable functions, as a function of the analysis of the coding context.

2. Method according to Claim 1, **characterized in that** the formation of a predicted descriptor comprises the application of a parametrizable prediction function, **in that** the adaptation comprises the modification of at least one of the parameters of the prediction function and **in that** certain of the adapted parameters are not integrated into an output stream intended for the decoder.

3. Method according to any one of Claims 1 and 2, **characterized in that**, when the group of usable functions comprises several distinct elements, the method furthermore comprises the expression, with respect to the group of usable functions with the adapted parameters, of an identifier (Id) of the selected prediction function and the integration, into an output stream (Φ), of this identifier (Id).

4. Method according to any one of Claims 1 to 3, **characterized in that** the said selection comprises the testing of each of the functions of the group (24) of usable functions and the selecting of a particular function with respect to these tests.

5. Computer program to be installed into a video processing appliance (4) comprising instructions for implementing the steps of a method of video coding according to any one of Claims 1 to 4 during an execution of the program by a calculation unit of the said appliance.

6. Image coder comprising:
- means (12) of determining a current descriptor (V) for a current image portion;
- means (26) of selecting a prediction function from a parametrizable group of usable functions (24) ;
- means (20) of prediction able to form a predicted descriptor (P) of the current image portion on the basis of at least one other image portion and of the selected prediction function;
- means (30) of determining a residual (ε) representing a difference between the predicted descriptor and the current descriptor; and
- means (32) of integrating this residual into an output stream (Φ) intended for a decoder (8),
**characterized in that** the coder furthermore comprises:
- means (42) of analysing the coding context;
- means (44) of adapting, by the addition or deletion of prediction functions of said group (24) of usable functions, as a function of the analysis of the coding context.

7. Coder according to Claim 6, **characterized in that** the said means (20) of prediction comprise a unit for applying a parametrizable prediction function and **in that** the means of adaptation are able to modify at least one of the parameters of the prediction function, certain of the adapted parameters not being integrated into an output stream intended for the decoder.

8. Coder according to any one of Claims 6 and 7, **characterized in that** it furthermore comprises means of expression, with respect to the group of usable functions with the adapted parameters, of an identifier (Id) of the selected prediction function and means of integrating this identifier into an output stream intended for the decoder.

9. Method of decoding images, the decoding of at least one current image portion comprising the following steps:
- the reception of a data stream (Φ) comprising a residual (ε);
- the selection of a prediction function from a parametrizable group (64) of usable prediction functions;
- the formation of a predicted descriptor (P*) of the current image portion on the basis of at least one other image portion and of the selected prediction function; and
- the combination of the predicted descriptor and of the residual so as to deliver a current descriptor (V*) of the current image portion,
**characterized in that** the method furthermore comprises:
- the analysis of the decoding context; and
- the adaptation by the addition or deletion of prediction functions of said group (24) of usable functions, as a function of the analysis of the decoding context.

10. Method according to Claim 9, **characterized in that** the formation of the predicted descriptor comprises the application of a parametrizable prediction function and **in that** the adaptation comprises the modification of at least one of the parameters of the prediction function.

11. Method according to any of Claims 9 and 10, **characterized in that** it comprises the reception of an identifier (Id), with respect to the group of usable functions with the adapted parameters, of the prediction function to be used.

12. Computer program to be installed in a video processing appliance, comprising instructions for implementing the steps of a method of decoding according to any one of Claims 9 to 11, during an execution of the program by a calculation unit of the said appliance.

13. Image decoder (8) comprising:
- means (50) of reception of a data stream (Φ) containing a residual (ε);
- means (64) of selecting a prediction function from a parametrizable group (64) of usable prediction functions;
- means (60) of prediction able to form a predicted descriptor (P*) of a current image portion on the basis of at least one other image portion and of the selected prediction function; and
- means (70) of combination of the predicted descriptor and of the residual so as to deliver a current descriptor (V*) of the current image portion,
**characterized in that** the decoder furthermore comprises:
- means (82) of analysing the decoding context; and
- means (84) of adapting, by the addition or deletion of prediction functions of said group (24) of usable functions, as a function of the analysis of the decoding context.

14. Decoder according to Claim 13, **characterized in that** the means of prediction comprise a unit for applying at least one parametrizable prediction function and **in that** the said means of adaptation are able to modify at least one of the parameters of the prediction function.

15. Method of transmitting images, **characterized in that**, for at least one current image portion, it comprises a coding phase comprising the following steps:
- the determination of at least one current descriptor (V) of the current image portion;
- the analysis of a coding context;
- the adaptation by the addition or deletion of prediction functions of a parametrizable group (24) of prediction functions usable for the coding, as a function of the analysis of the coding context;
- the selection of a prediction function from the group (24) of prediction functions usable for the coding;
- the formation of a first predicted descriptor (P) of the current image portion on the basis of at least one other image portion and of the prediction function selected for the coding;
- the determination of a residual (ε) representing the difference between the first predicted descriptor and the current descriptor; and
- the integration of the residual into a data stream (Φ),
the method furthermore comprises a decoding phase comprising, for the said current image portion, the following steps,
- the reception of the data stream (Φ) containing the residual (ε);
- the analysis of a decoding context;
- the adaptation by the addition or deletion of prediction functions of a parametrizable group (24) of prediction functions usable for the decoding, as a function of the analysis of the decoding context;
- the selection of a prediction function from the group of prediction functions usable for the decoding;
- the formation of a second predicted descriptor (P*) of the current image portion on the basis of at least one other image portion and of the prediction function selected for the decoding; and
- the combination of the second predicted descriptor and of the residual received so as to deliver a decoded version of the current descriptor (V*).
